# FASCICULE DE BREVET EUROPEEN

(11) **EP 3 098 101 B1**
(45) Date de publication et mention de la délivrance du brevet: **27.03.2019**
(21) Numéro de dépôt: 16167032.8
(22) Date de dépôt: 16.06.2010
(51) Int. Cl.: B60H 1/00, B60K 37/00, B60R 21/34, B62D 25/14, B60R 13/02, B60R 21/045

(54) **PLANCHE DE BORD DE VÉHICULE AUTOMOBILE AGENCÉE POUR SE DÉFORMER EN CAS DE CHOC**
ARMATURENBRETT EINES KRAFTFAHRZEUGS, DAS SO ANGEORDNET IST, DASS ES SICH IM FALL EINES AUFPRALLS VERFORMT
A MOTOR VEHICLE DASHBOARD ARRANGED TO BE DEFORMED IN CASE OF IMPACT

(30) Priorité: 19.06.2009 FR 0954174
(43) Date de publication de la demande: 30.11.2016
(62) Demande divisionnaire de: 10734247.9
(73) Titulaire: Faurecia Intérieur Industrie, 92000 Nanterre (FR)
(72) Inventeur: PONTHIEU, Didier, 60480 LA NEUVILLE SAINT PIERRE (FR); BERGERIOUX, Jacques, 18310 Genouilly (FR)
(74) Mandataire: Lavoix

(56) Documents cités:
- FR-A- 2 747 358
- JP-A- H0 585 226
- JP-A- 2005 119 469
- JP-A- 2006 082 675

## Description

La présente invention concerne une planche de bord pour véhicule automobile du type comprenant un panneau destiné à être placé sous un pare-brise, ledit panneau comprenant au moins une ouverture, la planche de bord comprenant en outre un dispositif d'aération comprenant un orifice de sortie, ledit orifice de sortie étant relié à ladite ouverture par un conduit de guidage de l'air s'étendant de l'orifice de sortie à l'ouverture.

En cas de choc entre un piéton et la partie avant d'un véhicule automobile, il se peut que la tête du piéton vienne heurter le pare-brise, ce qui peut lui causer de graves lésions. Afin de réduire ce risque, il est connu de prévoir un pare-brise agencé pour s'étoiler et pour s'enfoncer vers la planche de bord en cas de choc afin d'absorber une partie de l'énergie due au choc. Il est également connu de prévoir une planche de bord se déformant sous l'effet de l'enfoncement du pare-brise, par exemple en réalisant les conduits d'air de la planche de bord avec un matériau apte à absorber de l'énergie.

Cependant, l'absorption d'énergie par les moyens décrits ci-dessus n'est pas suffisante pour protéger le piéton de façon optimale en cas de choc contre la partie avant du véhicule automobile. Par conséquent, il existe toujours un risque important de causer des lésions à la tête d'un piéton en cas de choc.

L'un des buts de l'invention est de pallier cet inconvénient en proposant une planche de bord permettant d'améliorer l'absorption de l'énergie due à un choc contre le pare-brise d'un véhicule automobile.

A cet effet, l'invention concerne une planche de bord du type précité, selon la revendication 1. Différents modes de réalisation sont donnés par les revendications dépendantes.

Selon d'autres caractéristiques de la planche de bord :
- le conduit est réalisé en un matériau souple et est agencé pour se déformer de sorte à permettre l'enfoncement du panneau en cas de choc contre ledit panneau ;
- le conduit comprend au moins deux parties, lesdites parties étant agencées pour se séparer l'une de l'autre en cas de choc contre le panneau de sorte à permettre le déplacement d'au moins une partie du panneau par rapport au reste de la planche de bord ;
- le conduit comprend une partie avant solidaire de l'ouverture du panneau et une partie arrière solidaire de l'orifice de sortie du dispositif d'aération, lesdites parties étant fixées l'une à l'autre de façon amovible de sorte à former le conduit ;
- la liaison entre la partie avant et la partie arrière du conduit est réalisée de façon étanche ;
- la partie avant du conduit comprend une paroi formant conduit d'aération avec la partie avant du panneau ;
- la partie avant et/ou arrière du conduit est formée de plusieurs pièces formant des parties de la paroi du conduit ;
- l'ouverture du panneau comprend un élément de bordure, le conduit s'étendant dans le prolongement dudit élément sous le panneau ;
- le conduit comprend une valve disposée au voisinage de l'ouverture du panneau, ladite valve permettant de commander le passage de l'air par l'ouverture ;
- le conduit comprend des moyens de positionnement du conduit par rapport à la caisse du véhicule automobile ;
- le panneau comprend une partie avant formée par un élément de garnissage rigide, ledit élément formant une partie de la partie avant du conduit ; et
- ledit élément de garnissage est agencé pour se détacher du reste du panneau et pour s'enfoncer en cas de choc contre le panneau

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'une planche de bord selon un premier mode de réalisation de l'invention,
- la Fig. 2 est une représentation schématique de la planche de bord de la Fig. 1 déformée suite à un choc contre la planche de bord,
- la Fig. 3 est une représentation schématique en coupe d'une planche de bord selon un deuxième mode de réalisation de l'invention,
- la Fig. 4 est une représentation schématique en coupe de la planche de bord de la Fig. 3 déformée suite à un choc contre la planche de bord,
- la Fig. 5 est une représentation schématique en coupe d'une planche de bord selon un troisième mode de réalisation de l'invention,
- la Fig. 6 est une représentation schématique en coupe de la planche de bord de la Fig. 5 suite à un choc contre la planche de bord.

Dans la description, les termes « avant », « arrière », « dessus », « dessous », etc. sont définis par rapport aux directions usuelles d'un véhicule automobile monté.

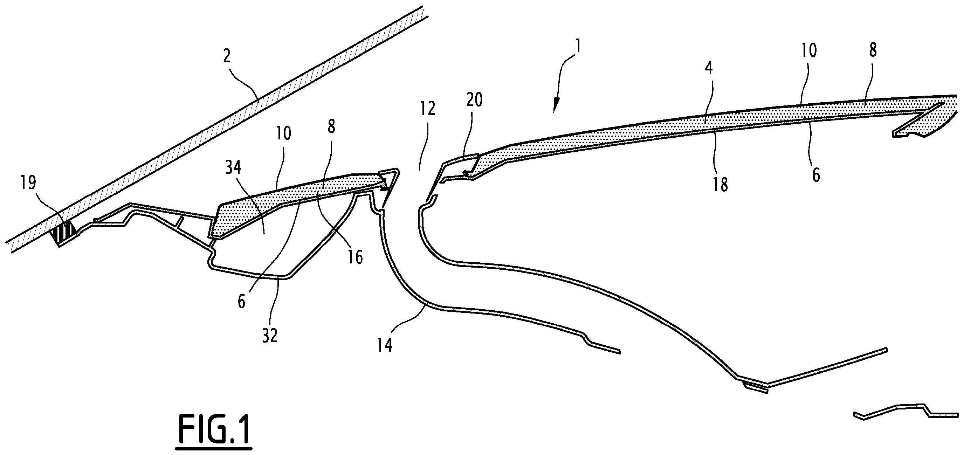

En référence à la Fig. 1, on décrit une planche de bord 1 disposée sous et en regard d'un pare-brise 2 d'un véhicule automobile.

La planche de bord 1 comprend un panneau 4 s'étendant sensiblement horizontalement de l'avant vers l'arrière du véhicule. De façon classique, ce panneau 4 est par exemple formé d'un insert rigide 6 sur lequel une couche de mousse 8 est disposée, une peau de garnissage 10 recouvrant la couche de mousse 8.

Le panneau 4 comprend au moins une ouverture 12 débouchant en regard du pare-brise 2. Cette ouverture 12 présente par exemple la forme d'une fente s'étendant selon une partie de la largeur du panneau 4 et permet par exemple le désembuage du pare-brise 2. A cet effet, l'ouverture 12 est reliée à un orifice de sortie d'air d'un dispositif d'aération (non représenté), tel qu'un appareil de climatisation, par un conduit 14 de guidage de l'air.

Le panneau 4 comprend une partie avant 16 s'étendant en avant de l'ouverture 12 et une partie arrière 18 s'étendant en arrière de l'ouverture 12. La partie avant 16 est disposée au voisinage et directement sous le pare-brise 2. La partie extrême avant de la partie avant 16 comprend par exemple des moyens de maintien 19 de la partie avant 16 par rapport au pare-brise 2. Ces moyens de maintien 19 sont par exemple formés par des agrafes ou des plots soutenant la partie avant 16 selon la direction verticale ou autre. Les moyens de maintien 19 comprennent des zones de fragilisation agencées pour rompre les moyens de maintien 19 en cas de choc et permettre un déplacement, notamment vertical, de la partie avant 16 du panneau 4. Ainsi, en cas de choc, si une poussée est exercée sur le dessus de la partie avant 16, celle-ci s'enfonce vers le bas.

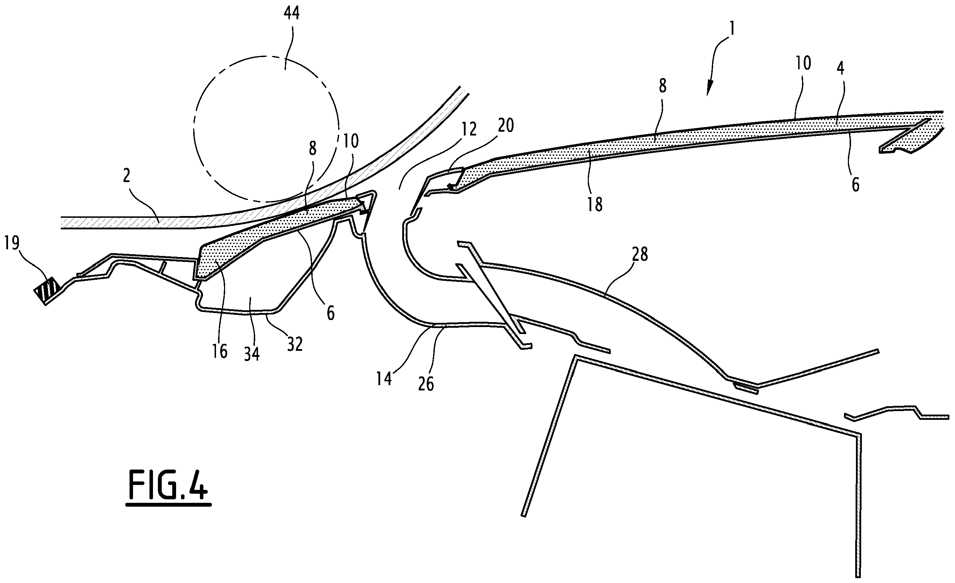

Selon les modes de réalisation représentés sur les Fig. 1 à 4, un élément de bordure 20, ou « frise de désembuage », est disposé dans l'ouverture 12 et fixé aux bords de la partie avant 16 et de la partie arrière 18 du panneau 4. Cet élément de bordure 20 est par exemple réalisé sous la forme d'un insert en matière plastique et forme les parois de l'ouverture 12. Le conduit 14 s'étend dans le prolongement de l'élément 20 sous le panneau 4. Selon un mode de réalisation, des moyens de fixation du conduit 14 à l'élément 20, tels que des moyens d'encliquetage, sont prévus.

Une valve (non représentée) est par exemple disposée dans l'élément 20 et disposée au voisinage de l'ouverture 12 du panneau 4, ladite valve permettant de commander le passage de l'air par l'ouverture 12 lorsque le désembuage du pare-brise est nécessaire.

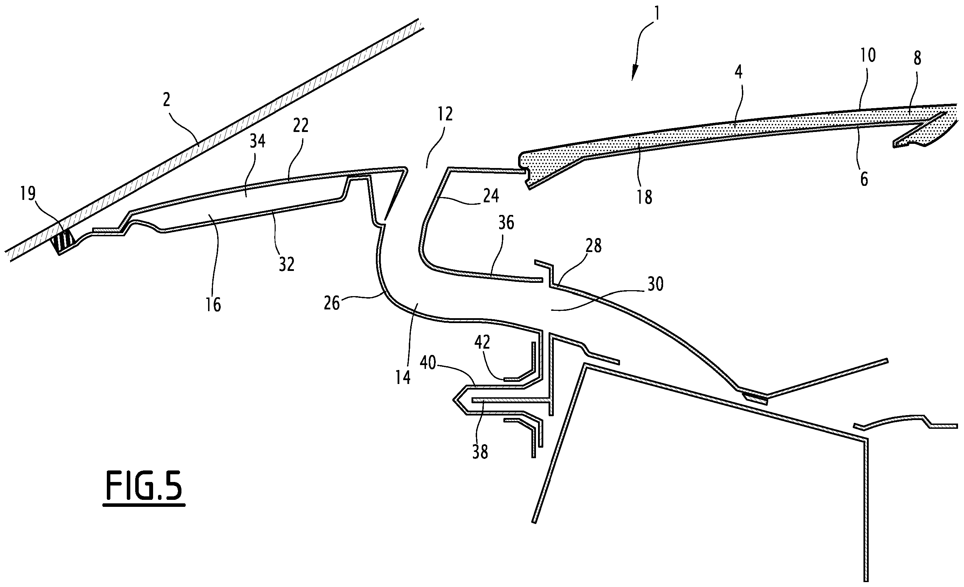

Selon le mode de réalisation représenté sur la Fig. 5, la partie avant 16 du panneau 4 est formée par un élément de garnissage rigide 22, tel qu'un plastron en matière plastique, dont une partie 24 forme les parois de l'ouverture 12. Dans ce mode de réalisation, l'ouverture 12 est pratiquée dans l'élément de garnissage 22 et le bord de la partie arrière 18 du panneau 4 est fixée à un bord de l'élément de garnissage. Ce plastron 22 peut également être utilisé dans les autres modes de réalisation de l'invention.

Selon le mode de réalisation représenté sur la Fig. 1, le conduit 14 est réalisé en un matériau souple, tel qu'un matériau soufflé, agencé pour absorber de l'énergie en cas de déformation du conduit 14. Selon ce mode de réalisation, le conduit 14 est par exemple réalisé en une seule pièce. Le fait de prévoir un conduit souple permet de simplifier le montage de la planche de bord 1 dans le véhicule automobile en autorisant des déformations du conduit 14 lors de ce montage.

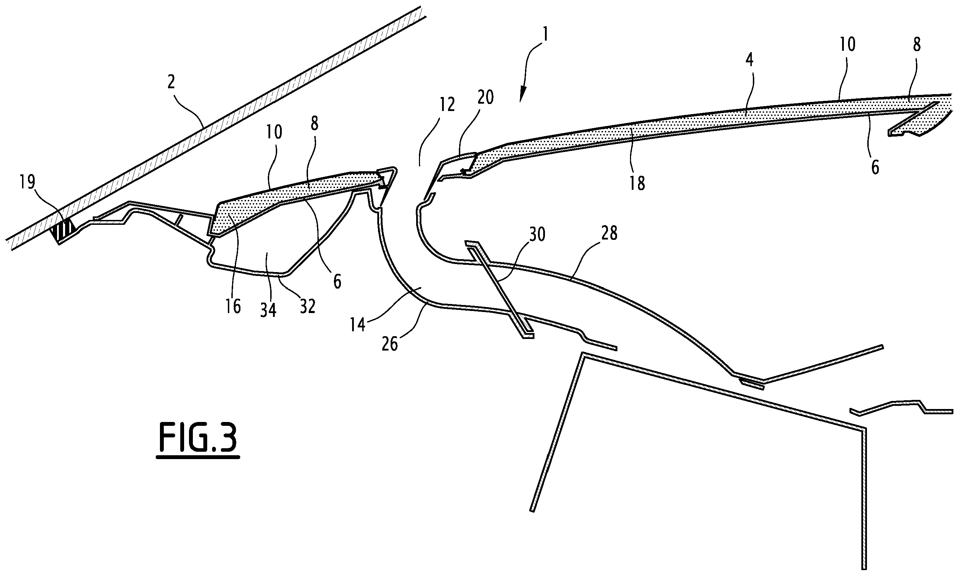

Selon les autres modes de réalisation, le conduit 14 est rigide et est réalisé en au moins deux parties, respectivement avant 26 et arrière 28. La partie avant 26 est solidaire de l'ouverture 12 du panneau 4 et la partie arrière 28 est solidaire de l'orifice de sortie du dispositif d'aération. Les parties avant 26 et arrière 28 sont fixées l'une à l'autre de façon étanche et amovible au niveau d'une interface 30, comme représenté sur la Fig. 3. La partie avant 26 et/ou arrière 28 du conduit 14 peut être formée de plusieurs pièces formant des parties de la paroi du conduit 14.

La partie avant 26 du conduit 14 comprend une paroi 32, réalisée d'une seule pièce avec la partie avant 26, s'étendant en regard de la partie avant 16 du panneau 4 et formant avec celle-ci un conduit d'aération 34 afin d'assurer la circulation d'air, par exemple entre le dispositif d'aération et des sorties d'aération débouchant dans l'habitacle du véhicule automobile. Le conduit d'aération 34 est par exemple réalisé en un matériau soufflé permettant au conduit 34 de présenter des caractéristiques d'absorption d'énergie en cas de choc par écrasement dudit conduit 34 lors de l'enfoncement de la partie avant 16, comme cela sera décrit ultérieurement.

Dans le cas où un plastron 22 est utilisé pour réaliser la partie avant 16 du panneau 4, l'ouverture 12 est réalisée dans le plastron 22 et une partie 36 du plastron 22 forme une partie de la partie avant 26 du conduit 14.

Selon le mode de réalisation représenté sur la Fig. 5, le conduit 14 et le plastron 22 sont montés dans le véhicule avant le poste de conduite. Dans ce cas, le conduit 14 comprend des moyens de positionnement du conduit 14 par rapport à la caisse du véhicule automobile et notamment des moyens de maintien du conduit 14 selon une direction verticale par rapport à la caisse. Comme représenté sur la Fig. 5, ces moyens de positionnement comprennent par exemple un doigt 38 solidaire de la partie arrière 28 du conduit 14 et un manchon 40 solidaire de la partie avant 26 du conduit 14. Le doigt 38 est disposé dans le manchon 40 et l'ensemble est inséré dans un orifice 42 prévu dans la caisse ou dans un élément solidaire de la caisse au voisinage du doigt 38 et du manchon 40.

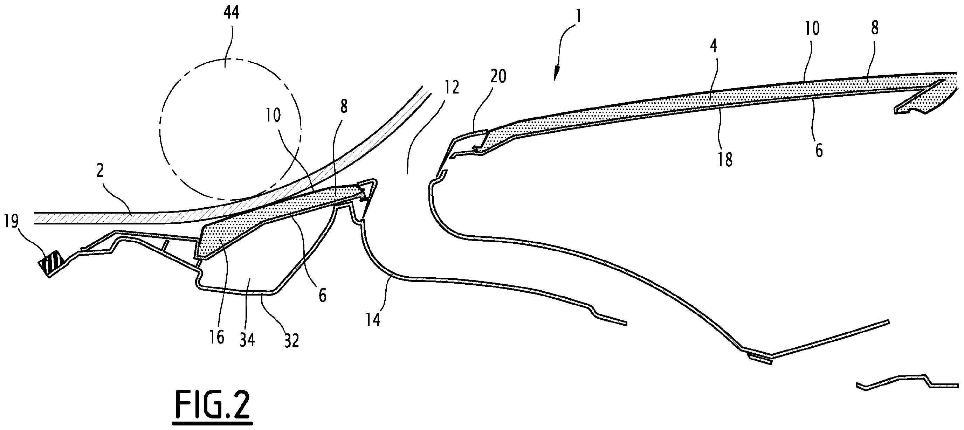

On décrit à présent le comportement de la planche de bord 1 décrite ci-dessus en cas de choc contre le pare-brise 2 du véhicule automobile. Sur les Fig. 2, 4 et 6, on a représenté un objet 44, par exemple la tête d'un piéton, entrant en contact avec le pare-brise 2.

Le choc entre l'objet 44 et le pare-brise 2 entraîne un enfoncement du pare-brise 2 vers la partie avant 16 du panneau 4. Le pare-brise 2 se déforme en s'étoilant et en absorbant déjà une partie de l'énergie due au choc. Sous l'effet de son enfoncement, le pare-brise 2 vient au contact de la partie avant 16 du panneau 4 et entraîne l'enfoncement de celle-ci selon une direction sensiblement verticale. L'enfoncement de la partie avant 16 se fait après rupture des moyens de maintien 19 et une partie de l'énergie due au choc est encore absorbée par l'enfoncement de la partie avant 16 et la déformation du conduit d'air 34.

Selon le mode de réalisation dans lequel le conduit 14 est souple et comme représenté sur la Fig. 2, l'enfoncement de la partie avant 16 entraîne la déformation du conduit 14 souple qui s'écrase en absorbant de l'énergie et permet un enfoncement plus profond de la partie avant 16, ce qui augmente encore l'absorption d'énergie.

Selon les modes de réalisations dans lesquels le conduit 14 est réalisé en plusieurs parties 26 et 28, la partie avant 26 du conduit 14 se détache de la partie arrière 28 de sorte à permettre un enfoncement plus important de la partie avant 16 du panneau, ce qui augmente l'absorption d'énergie.

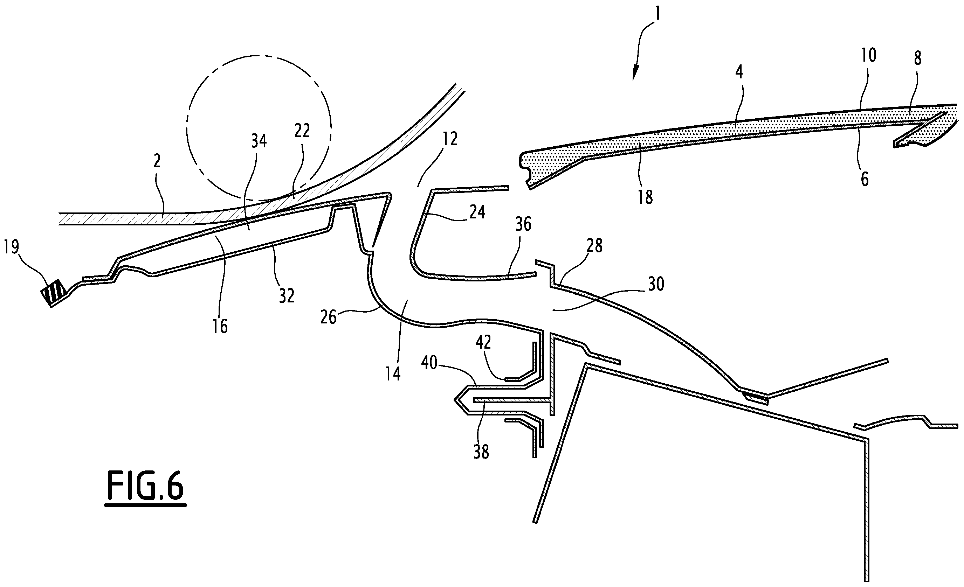

Dans le mode de réalisation représenté sur la Fig. 5, tout l'élément de garnissage 22 peut s'enfoncer plus profondément du fait de la structure du conduit 14 dont une partie est formée par l'élément de garnissage 22. Selon un mode de réalisation, l'élément de garnissage 22 est agencé pour se détacher complètement du reste du panneau 4. Par conséquent, dans ce cas, l'élément de garnissage 22 se détache de la partie arrière 18 du panneau 4 et s'enfonce avec la partie avant 26 du conduit 14, comme représenté sur la Fig. 6.

Le matériau employé pour former le conduit 14 peut également être choisi pour favoriser encore l'absorption d'énergie. Ainsi, la déformation du conduit 14 en elle-même favorise également l'absorption d'énergie due au choc contre le pare-brise 2.

La planche de bord 1 décrite ci-dessus permet d'améliorer la protection des piétons en améliorant l'absorption d'énergie en cas de choc contre le pare-brise 2 du véhicule. Cette amélioration est obtenue en faisant participer la planche de bord 1 à l'absorption d'énergie grâce au conduit de guidage d'air 14. Une telle planche de bord 1 est simple à mettre en oeuvre et à monter dans un véhicule automobile étant donné qu'elle est similaire à une planche de bord classique.

## Revendications

1. Planche de bord (1) pour véhicule automobile comprenant un panneau (4) destiné à être placé sous un pare-brise (2), ledit panneau (4) comprenant au moins une ouverture (12), le panneau comprenant une partie avant (16, 26) s'étendant en avant de l'ouverture (12) et une partie arrière (18, 28) s'étendant en arrière de l'ouverture (12), la partie avant comprenant une partie extrême avant, la planche de bord comprenant en outre un dispositif d'aération comprenant un orifice de sortie, ledit orifice de sortie étant relié à ladite ouverture (12) par un conduit de guidage de l'air (14) s'étendant de l'orifice de sortie à l'ouverture (12), **caractérisé en ce que** la partie extrême avant de la partie avant (16) comprend des moyens de maintien (19) de la partie avant (16) par rapport au pare-brise (2), les moyens de maintien (19) comprenant des zones de fragilisation agencées pour rompre les moyens de maintien (19) en cas de choc et permettre un déplacement, notamment vertical, de la partie avant (16) du panneau (4).

2. Planche de bord selon la revendication 1, **caractérisée en ce que** ledit conduit est agencé pour se déformer ou pour se séparer en au moins deux parties en absorbant de l'énergie de sorte à permettre l'enfoncement du panneau en cas de choc contre le panneau.

3. Planche de bord selon la revendication 1 ou 2, **caractérisée en ce que** les moyens de maintien (19) sont formés par des agrafes ou des plots soutenant la partie avant (16) selon la direction verticale.

4. Planche de bord selon l'une quelconque des revendications 1 à 3, **caractérisée en ce que** le conduit (14) comprend au moins deux parties (26, 28), lesdites parties (26, 28) étant agencées pour se séparer l'une de l'autre en cas de choc contre le panneau (4) de sorte à permettre le déplacement d'au moins une partie (16) du panneau (4) par rapport au reste de la planche de bord.

5. Planche de bord selon l'une quelconque des revendications 1 à 4, **caractérisée en ce que** l'ouverture (12) du panneau (4) comprend un élément de bordure (20), le conduit (14) s'étendant dans le prolongement dudit élément (20) sous le panneau (4).

6. Planche de bord selon l'une quelconque des revendications 1 à 5, **caractérisée en ce que** le conduit (14) comprend des moyens de positionnement (38, 40, 42) du conduit (14) par rapport à la caisse du véhicule automobile.

7. Planche de bord selon l'une quelconque des revendications 1 à 6, **caractérisée en ce que** le panneau (4) comprend une partie avant (16) formée par un élément de garnissage rigide (22), ledit élément (22) formant une partie de la partie avant (26) du conduit (14).

8. Planche de bord selon la revendication 7, **caractérisée en ce que** ledit élément de garnissage (22) est agencé pour se détacher du reste du panneau (4) et pour s'enfoncer en cas de choc contre le panneau (4).

9. Planche de bord selon l'une quelconque des revendications 1 à 8, **caractérisée en ce que** le panneau (4) comprend une partie avant (16) formée par un élément de garnissage rigide (22), ledit élément (22) formant une partie des parois de l'ouverture (12).

10. Planche de bord selon l'une quelconque des revendications 1 à 9, **caractérisée en ce que** le conduit (14) est rigide et réalisé en au moins deux parties (26, 28).

11. Planche de bord selon l'une quelconque des revendications 1 à 10, **caractérisée en ce que** le conduit (14) comprend une partie avant (26) solidaire de l'ouverture (12) du panneau (4) et une partie arrière (28) solidaire de l'orifice de sortie du dispositif d'aération.

12. Planche de bord selon la revendications 11, **caractérisée en ce que** la partie avant (26) du conduit (14) comprend une paroi (32) réalisée d'une seule pièce avec la partie avant (26), ladite paroi (32) s'étendant en regard de la partie avant (16) du panneau 4 et formant avec celle-ci un conduit d'aération (34) assurant la circulation d'air entre le dispositif d'aération et des sorties d'aération débouchant dans l'habitacle du véhicule automobile.

13. Planche de bord selon l'une quelconque des revendications 1 à 12, **caractérisée en ce que** sous l'effet d'un choc entre un objet (44) et le pare-brise (2) entrainant un enfoncement du pare-brise (2) vers la partie avant (16) du panneau (4), le pare-brise (2) vient en contact avec la partie avant (16) du panneau (4) et entraine l'enfoncement de la partie avant (16) selon une direction sensiblement verticale, l'enfoncement de la partie avant (16) se faisant après rupture des moyens de maintien (19).

## Patentansprüche

1. Armaturenbrett (1) für ein Kraftfahrzeug, aufweisend ein Paneel (4), das dazu bestimmt ist, unter einer Windschutzscheibe (2) platziert zu sein, wobei das Paneel (4) wenigstens eine Öffnung (12) aufweist, wobei das Paneel aufweist einen vorderen Abschnitt (16, 26), der sich vor der Öffnung (12) erstreckt, und einen hinteren Abschnitt (18, 28), der sich hinter der Öffnung (12) erstreckt, wobei der vordere Abschnitt einen vorderen Endabschnitt aufweist, wobei das Armaturenbrett ferner eine Lüftungsvorrichtung aufweist, die ein Ausgangsloch aufweist, wobei das besagte Loch mit der besagten Öffnung (12) verbunden ist mittels einer Leitung zum Führen der Luft (14), die sich von dem Ausgangsloch zu der Öffnung (12) erstreckt, **dadurch gekennzeichnet, dass** der vordere Endabschnitt des vorderen Abschnitts (16) Mittel zum Halten (19) des vorderen Abschnitts (16) bezüglich der Windschutzscheibe (2) aufweist, wobei die Mittel zum Halten (19) Schwächungsbereiche aufweisen, die eingerichtet sind zum Zerreißen der Mittel zum Halten (19) im Falle eines Stoßes und zum Erlauben einer, insbesondere vertikalen, Verlagerung des vorderen Abschnitts (16) des Paneels (4).

2. Armaturenbrett gemäß Anspruch 1, **dadurch gekennzeichnet, dass** die besagte Leitung eingerichtet ist, um sich zu verformen oder um sich in wenigstens zwei Teile zu separieren unter Absorbieren der Energie, um ein Eindrücken des Paneels zu erlauben in Falle eines Stoßes gegen das Paneel.

3. Armaturenbrett gemäß Anspruch 1 oder 2, **dadurch gekennzeichnet, dass** die Mittel zum Halten (19) gebildet sind von Klammern oder von Klötzen, die den vorderen Abschnitt (16) in der vertikalen Richtung stützen.

4. Armaturenbrett gemäß irgendeinem der Ansprüche 1 bis 3, **dadurch gekennzeichnet, dass** die Leitung (14) wenigstens zwei Abschnitte (26, 28) aufweist, wobei die besagten Abschnitte (26, 28) eingerichtet sind, um sich voneinander zu separieren im Falle des Stoßes gegen das Paneel (4), um die Verlagerung wenigstens eines Abschnitts (16) des Paneels (4) bezüglich des Rests des Armaturenbretts zu erlauben.

5. Armaturenbrett gemäß irgendeinem der Ansprüche 1 bis 4, **dadurch gekennzeichnet, dass** die Öffnung (12) des Paneels (4) aufweist ein Einfassungselement (20), wobei sich die Leitung (14) in der Verlängerung des besagten Elements (20) unter dem Paneel (4) erstreckt.

6. Armaturenbrett gemäß irgendeinem der Ansprüche 1 bis 5, **dadurch gekennzeichnet, dass** die Leitung (14) aufweist Mittel zur Positionierung (38, 40, 42) der Leitung (14) bezüglich der Karosserie des Kraftfahrzeugs.

7. Armaturenbrett gemäß irgendeinem der Ansprüche 1 bis 6, **dadurch gekennzeichnet, dass** das Paneel (4) aufweist einen vorderen Abschnitt (16), der von einem starren Bestückungselement (22) gebildet ist, wobei das besagte Element (22) einen Abschnitt des vorderen Abschnitts (26) der Leitung (14) bildet.

8. Armaturenbrett gemäß Anspruch 7, **dadurch gekennzeichnet, dass** das besagte Bestückungselement (22) eingerichtet ist, um sich von dem Rest des Paneels (4) zu lösen und um eingedrückt zu werden im Falle des Stoßes gegen das Paneel (4).

9. Armaturenbrett gemäß irgendeinem der Ansprüche 1 bis 8, **dadurch gekennzeichnet, dass** das Paneel (4) aufweist einen vorderen Abschnitt (16), der von einem starren Bestückungselement (22) gebildet ist, wobei das besagte Element (22) einen Abschnitt von Wänden der Öffnung (12) bildet.

10. Armaturenbrett gemäß irgendeinem der Ansprüche 1 bis 9, **dadurch gekennzeichnet, dass** die Leitung (14) starr ist und aus wenigstens zwei Abschnitten (26, 28) realisiert ist.

11. Armaturenbrett gemäß irgendeinem der Ansprüche 1 bis 10, **dadurch gekennzeichnet, dass** die Leitung (14) aufweist einen vorderen Abschnitt (26), der fest mit der Öffnung (12) des Paneels (4) zusammenhängt, und einen hinteren Abschnitt (28), der fest mit dem Ausgangsloch der Lüftungsvorrichtung zusammenhängt.

12. Armaturenbrett gemäß Anspruch 11, **dadurch gekennzeichnet, dass** der vordere Abschnitt (26) der Leitung (14) eine Wand (32) aufweist, die in einem Stück mit dem vorderen Abschnitt (26) realisiert ist, wobei die besagte Wand (32) sich gegenüber dem vorderen Abschnitt (16) des Paneels (4) erstreckt und mit diesem eine Lüftungsleitung (34) bildet, welche die Zirkulation von Luft zwischen der Lüftungsvorrichtung und Lüftungsausgängen gewährleistet, die in die Fahrgastzelle des Kraftfahrzeugs ausmünden.

13. Armaturenbrett gemäß irgendeinem der Ansprüche 1 bis 12, **dadurch gekennzeichnet, dass** unter der Wirkung eines Stoßes zwischen einem Objekt (44) und der Windschutzscheibe (2), bewirkend ein Eindrücken der Windschutzscheibe (2) zu dem vorderen Abschnitt (16) des Paneels (4) hin, die Windschutzscheibe (2) in Kontakt mit dem vorderen Abschnitt (16) des Paneels (4) kommt und das Eindrücken des vorderen Abschnitts (16) in eine im Wesentlichen vertikale Richtung bewirkt, wobei das Eindrücken des vorderen Abschnitts (16) nach dem Brechen der Mittel zum Halten (19) auftritt.

## Claims

1. Dashboard (1) for a motor vehicle comprising a panel (4) intended to be placed under a windscreen (2), said panel (4) comprising at least one opening (12), the panel comprising a front part (16, 26) extending in front of the opening (12) and a rear part (18, 28) extending behind the opening (12), the front part comprising an extreme front part, the dashboard further comprising a ventilation device comprising an outlet orifice, said outlet orifice being linked to said opening (12) by an air guiding duct (14) extending from the outlet orifice to the opening (12), **characterised in that** the extreme front part of the front part (16) comprises securing means (19) for securing the front part (16) relative to the windscreen (2), the securing means (19) comprising embrittlement zones arranged to break the securing means (19) in case of impact and allow a displacement, especially vertical, of the front part (16) of the panel (4).

2. Dashboard according to claim 1, **characterised in that** said duct is arranged to be deformed or to be separated into at least two parts by absorbing energy so as to allow the panel to be driven in in case of impact against the panel.

3. Dashboard according to claim 1 or 2, **characterised in that** the securing means (19) are formed by clips or blocks supporting the front part (16) in the vertical direction.

4. Dashboard according to any one of claims 1 to 3, **characterised in that** the duct (14) comprises at least two parts (26, 28), said parts (26, 28) being arranged to be separated from one another in case of impact against the panel (4) so as to allow the displacement of at least one part (16) of the panel (4) relative to the rest of the dashboard.

5. Dashboard according to any one of claims 1 to 4, **characterised in that** the opening (12) of the panel (4) comprises a trim element (20), the duct (14) extending in the extension of said element (20) under the panel (4).

6. Dashboard according to any one of claims 1 to 5, **characterised in that** the duct (14) comprises positioning means (38, 40, 42) for positioning the duct (14) relative to the body of the motor vehicle.

7. Dashboard according to any one of claims 1 to 6, **characterised in that** the panel (4) comprises a front part (16) formed by a rigid lining element (22), said element (22) forming a part of the front part (26) of the duct (14).

8. Dashboard according to claim 7, **characterised in that** said lining element (22) is arranged to be detached from the rest of the panel (4) and to be driven in in case of impact against the panel (4).

9. Dashboard according to any one of claims 1 to 8, **characterised in that** the panel (4) comprises a front part (16) formed by a rigid lining element (22), said element (22) forming a part of the walls of the opening (12).

10. Dashboard according to any one of claims 1 to 9, **characterised in that** the duct (14) is rigid and produced in at least two parts (26, 28).

11. Dashboard according to any one of claims 1 to 10, **characterised in that** the duct (14) comprises a front part (26) secured to the opening (12) of the panel (4) and a rear part (28) secured to the outlet orifice of the ventilation device.

12. Dashboard according to claim 11, **characterised in that** the front part (26) of the duct (14) comprises a wall (32) produced in a single piece with the front part (26), said wall (32) extending facing the front part (16) of the panel (4) and forming therewith a ventilation duct (34) ensuring the circulation of air between the ventilation device and ventilation outlets emerging in the interior of the motor vehicle.

13. Dashboard according to any one of claims 1 to 12, **characterised in that**, under the effect of an impact between an object (44) and the windscreen (2) causing the windscreen (2) to be driven in towards the front part (16) of the panel (4), the windscreen (2) comes into contact with the front part (16) of the panel (4) and causes the front part (16) to be driven in in a substantially vertical direction, the front part (16) being driven in after the securing means (19) have been broken.
